# EUROPEAN PATENT APPLICATION

(11) **EP 3 506 118 A1**
(43) Date of publication of application: **03.07.2019**
(21) Application number: 18176915.9
(22) Date of filing: 11.06.2018
(51) Int. Cl.: G06F 16/11

(54) **DATA ARCHIVING**

(71) Applicant: ABB Schweiz AG, 5400 Baden (CH)
(72) Inventor: Luotojarvi, Mika, 02730 Espoo (FI); HYTTINEN, Riku, 04230 Kerava (FI); Vihtari, Tomi, 04500 Kellokosk (FI)
(74) Representative: Kolster Oy Ab

(57) **Abstract**

By maintaining an archiving log comprising log entries created in response to archiving events relating to one or more pieces of the data to be archived, the pieces being indicated in the log entries, it is possible to have an archive comprising an active history, which comprises all received pieces of data, and an archived history, which comprises only part of the received pieces of data. During an archiving process, which converts part of the active history to be part of the archived history, those pieces of the data that are not indicated in the archiving log as the data to be archived are deleted from the active history and those pieces of data that are indicated in the archiving log as the data to be archived are maintained in the part becoming part of the archived history.

## Description

### FIELD

The present invention relates to archiving data, and especially to archiving data with high incoming volume.

### BACKGROUND ART

The evolvement of networking between computers and computing devices, especially different sensors, capable of communicating without user involvement, has increased the amount of data collected on equipment and processes. By way of example, it is not unheard of to have thousands of sensors and control elements monitoring aspects of a process and equipment within an industrial plant. Systems and methods are provided for storing this automatically collected data with high incoming volume of data so that it can be utilized later for different analysis. However, storing all collected data results in a very large data set posing strict requirements to data maintenance.

### SUMMARY

An object of the present invention is to provide an online archive that is easy to maintain and has a reasonable size. The object of the invention is achieved by a method, equipment and a computer program product which are characterized by what is stated in the independent claims. The preferred embodiments of the invention are disclosed in the dependent claims.

A general aspect of the invention uses an archiving log. This provides a mechanism with which it is, for example, possible to provide the collected data with the needed precision for later analysis without complicated data management.

### BRIEF DESCRIPTION OF THE DRAWINGS

In the following, exemplary embodiments will be described in greater detail with reference to accompanying drawings, in which
Figure 1 shows simplified architecture of a system and a block diagram of exemplified equipment;
Figures 2 illustrates a logical structure of a combined archive;
Figures 3 to 7 are flow charts illustrating exemplary functionalities; and
Figure 8 is a schematic block diagram.

### DETAILED DESCRIPTION OF SOME EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

The present invention is applicable to any system or equipment that is configured to store, or archive, at least collected online measurement data on one or more devices and/or processes. Different embodiments and examples are described below using single units and computing device and memory, without restricting the embodiments/examples to such a solution. Concepts called cloud computing and virtualization may be used as well. The virtualization may allow a single physical computing device to host one or more instances of virtual machines that appear and operate as independent computing devices, so that a single physical computing device can create, maintain, delete, or otherwise manage virtual machines in a dynamic manner. It is also possible that device operations will be distributed among a plurality of servers, nodes, devices or hosts. In cloud computing network devices, computing devices and/or storage devices provide shared resources. Some other technology advancements, such as Software-Defined Networking (SDN), may cause one or more of the functionalities described below to be migrated to any corresponding abstraction or apparatus or device. Therefore, all words and expressions should be interpreted broadly, and they are intended to illustrate, not to restrict, the embodiment.

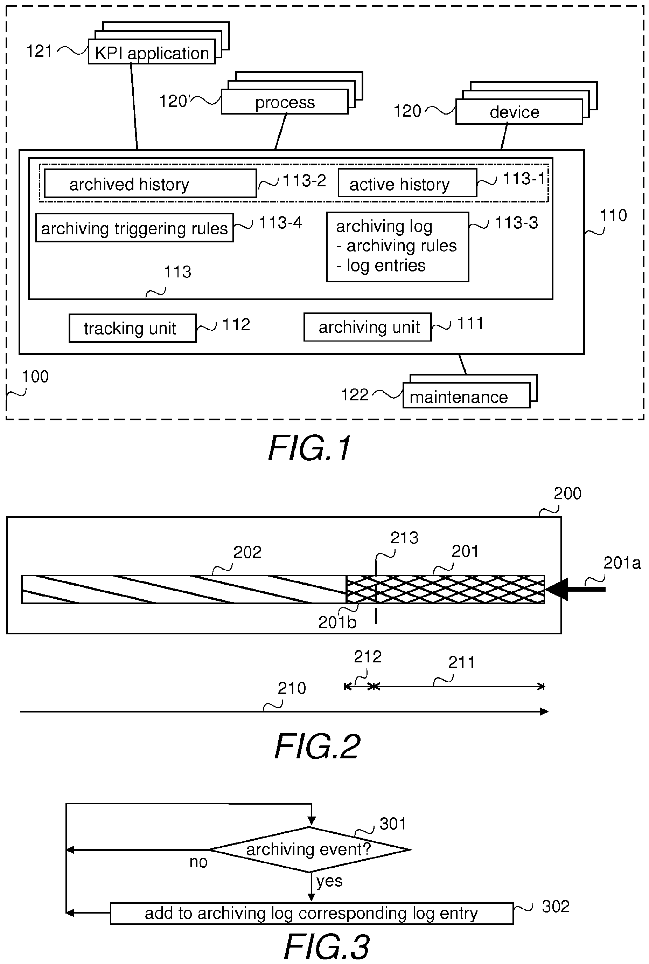

A general exemplary architecture of a system is illustrated in Figure 1. Figure 1 is a simplified system architecture only showing some devices, apparatuses and functional entities, all being logical units whose implementation and/or number may differ from what is shown. The connections shown in Figure 1 are logical connections; the actual physical connections may be different. It is apparent to a person skilled in the art that the systems also comprise other equipment (apparatuses, devices, nodes), functions and structures used in or for data collection (measurements), data management, and communication in the system or in one part of the system. They, as well as the protocols used, are well known by persons skilled in the art and are irrelevant to the actual invention. Therefore, they need not to be discussed in more detail here.

In the example illustrated in Figure 1, the system 100 comprises entities 120, 120', 121, 122 that provide and/or use data with high incoming volume to an online archiving equipment 110.

The online archiving equipment 110 may be a computing device comprising memory or a sub-system, online archiving system, comprising computing devices that are configured to appear as one logical online archive for devices that store data thereto and/or retrieve data therefrom. The online archive may appear as a device level online archive, plant level online archive, enterprise level online archive, or a global cloud level online archive, for example.

The online archiving equipment 110 comprises in the illustrated example for the online archive an archiving unit 111 and a tracking unit 112 for maintaining in a memory 113 an active history 113-1, an archived history 113-2 and an archiving log 113-3. Examples of functionalities of the units will be described in more detail below with Figures 3 to 7. Further, although illustrated as separate units, the units may be integrated together. The active history 113-1 and the archived history 113-2 form a logical combined online archive that is available to all users, either directly, or by means of the archiving log 113-3. A user means herein different devices and sensors that can access the online archiving equipment. It should be appreciated that the active history 113-1 and the archived history 113-2 may be a continuous history, although illustrated as separate histories in Figure 1 to illustrate the difference. Furthermore, the archived history 113-2 may comprise several physically separated pieces of history. The archiving log 113-3 comprises log entries indicating what has been archived and archiving rules (commands) defining what to archive. The archiving rules comprise one or more different rules and filters based on which the amount of the data in the combined archive is minimised while allowing continuous calculation of different key performance indicators and ensuring that there is enough historic data available for analysing past sequences of events and other root causes in the future. Typically, only data collected during a certain time period before and/or after a disturbance is of interest and needed when later comparing similar disturbances with each other, the other data is useless for that purpose. A non-limiting list of examples of archiving rules comprises:
- archive all incoming data within a certain time period
- archive pieces of data belonging to an event log
- archive pieces of data belonging to an alarm log
- archive pieces of data belonging to a maintenance log
- archive all measurement data on process Z
- in response to a disturbance X originating from a device Y archive pieces of data measured from the device Y within a time period of z, determined from an occurrence time of the disturbance X
- in response to event A, archive pieces of data preceding event A within a specific time
- in response to user input to archive an event B, archive all pieces of data received within a time period preceding an occurrence of the event B by y and following the occurrence of the event B by x
- when a value of a specific key performance indicator is below a first limit or above a second limit, archive pieces of data used to calculate the value, a subsequent value and a preceding value of the key performance indicator
- if a user input indicates to archive less, or more than a preconfigured archiving rule relating to the same type of event, when to archive according to the user input, when according to the preconfigured archiving rule

Further, the memory 113 in the online archiving equipment 110 comprises archiving triggering rules 113-4 for the online archive. The archiving triggering rules 113-4 comprise one or more different rules by means of which it is ensured that archiving happens automatically, i.e. without user involvement. It should be appreciated that one or more archiving triggering rules may be configured (preset) to the archiving unit. A non-limiting list of examples of such archiving triggering rules include:
- trigger archiving at certain intervals
- trigger archiving at certain time(s) of a day each day (or every second day or on a specific weekday or on a specific day of a month)
- pre-trigger the archiving when the length in time of the tail portion exceeds a predetermined limit, and perform the actual triggering after that at a moment when no disturbances are detected or the length in time of the tail portion exceeds a second predetermined limit whichever happens earlier
- trigger the archiving when monitored use of system resources are below a predetermined limit

As is evident from the above, versatile archiving triggering rules can be preconfigured to the online system to control the timing of the archiving process. By controlling the timing of the archiving process it is possible to perform the archiving procedure when resources are available, thereby minimizing possible side effects to the overall system. For example, just storing received pieces of data during a disturbance and performing the archiving procedure later results in the use of the minimum amount of resources to the archiving when the resources are needed to overcome the disturbance, and performing the archiving when resources are not tied to the disturbance

Entities 120, 120' represent in the system 100 different devices, machines, apparatuses, equipment, systems, sub-systems, processes etc., wherefrom data is automatically measured and collected, for example by means of sensors. They illustrate that varied characteristics may be measured, varied amount of data may be sent for each measurement, with a varied frequency, and the data sent may be measurement data only, or measurement data with some additional data.

A wide range of applications exists for automation control and monitoring systems, particularly in industrial settings. Entities 121 represent herein different devices comprising applications that analyse the data, or some pieces of the data, for controlling purposes in real-time, for example. The analysis may include outputting alarms, disturbances, exceptions, and/or determining different properties relating to the measurement data, such as a minimum value and a maximum value, and/or calculating different key performance indicators (KPIs). Naturally analysis results, such as reported KPIs, may be stored to the online archive.

In the example of Figure 1, there are also entities 122 that illustrate use of the online archive for root cause analysis or for maintenance purposes, for example.

The different entities 120, 120', 121, 122 that create and/or use the data in the online archiving equipment 110 are described only to illustrate possible scenarios, and they bear no significance to the invention. Therefore, they are not described in more detail here. Further, as said above, data management techniques to store and retrieve the data, and details of how the online archiving equipment is interfaced by the entities, bear no significance to the invention. It is obvious for one skilled in the art that any known or future solution may be used.

Figure 2 illustrates a logical structure of a combined archive. The combined archive 200 means a combination of the archived history 202 and the active history 201 described above.

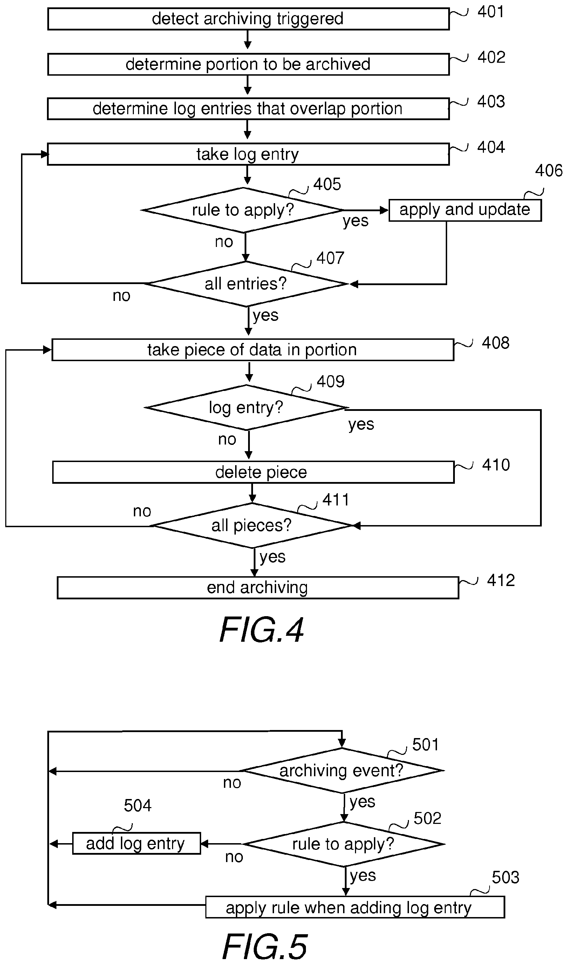

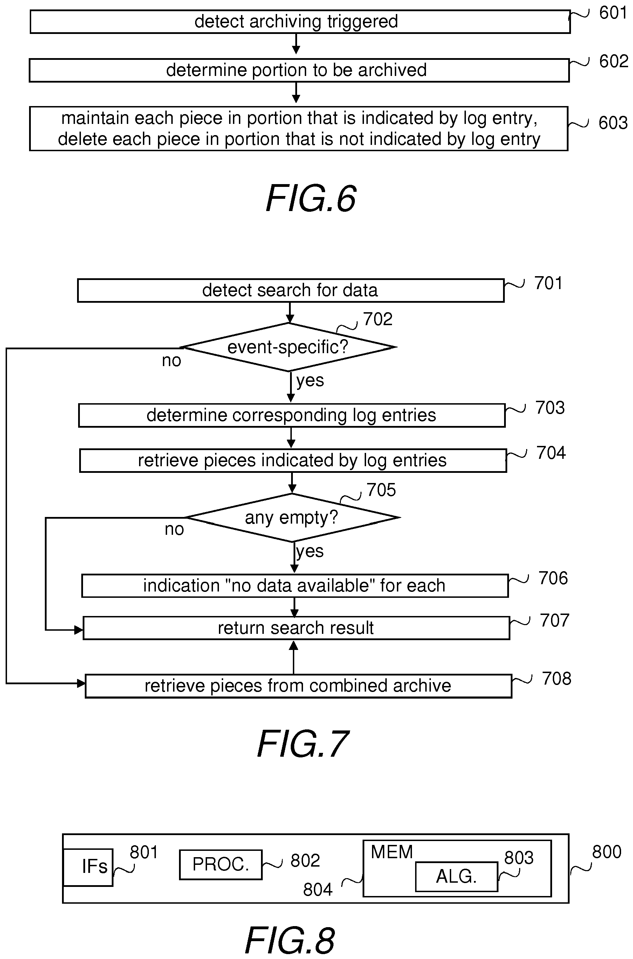

Referring to Figure 2, new pieces 201a of data are stored to the active history 201 when they are received. Hence, the active history 201 comprises the received high volume of data. As time 210 passes, earlier received older pieces fall into a tail part 201b, or a tail portion, that will undergo an archiving procedure, an example of which is described in more detail with Figure 4 and Figure 6. During the archiving procedure, some specific pieces of the received high volume of data will continue to be stored but in the archived history 202 portion while other pieces of data will be deleted. In other words, the active history is converted to archived history. One may consider the active history as data with high resolution, and the archived history as data with low resolution or with mixed resolution.

Each new piece 201a of data is associated with time information, such as a timestamp or a time period, or corresponding information, such as sequential numbering, identifying when the piece of data was created, and indicating occurrence order of a corresponding event. The time information allows tracking progress over time, for example. The time period may indicate a starting time of an event and ending time of an event. For example, manufacturing a structure A started at t1 and ended at t2. A combination of the time information and information on an entity wherefrom the piece of data is received is stored herein with the piece of data and can be used as a unique identifier of the piece of data. It should be appreciated that the archiving may be implemented without storing the time information and/or the information on the entity, and simply store the pieces of data as they arrive.

In the illustrated example, a length in time of the archived history increases while the time passes but a length in time of the active history varies. The length in time of the active history has a constant length in time 211 between the current time and a length indicator 213, and a varying length in time 212 of the tail portion 201b. For example, after the archiving procedure the length in time 212 of the tail part may in praxis be zero, or near zero.

Figures 3 to 7 illustrate examples of functionalities of the online archiving equipment while different data on the system is collected, stored and/or used. The illustrated different functionalities may be performed in parallel, and there may be parallel similar functionalities running.

Figure 3 illustrates an example what the tracking unit, or a corresponding instance, performs as a background operation when different pieces of data are stored to the active history of the online archiving equipment, or some data retrieved from the online archiving equipment. In the example it is assumed that the tracking unit monitors data inputs and data outputs (i.e. data retrievals) but that is not separately shown.

Referring to Figure 3, when an archiving event is detected (step 301: yes), a corresponding log entry is added in step 302 to the archiving log, and then the process returns to step 301 to monitor whether or not an archiving event is detected.

An archiving event is detected when a user input indicating "store this piece of data, or store these pieces of data" is received. For example, if in a control room an operator notices a small deviation of a KPI value, the operator may trigger storing the KPI value, or storing the KPI value with values used to calculate the KPI value. Then the log entry indicates the KPI and comprises the identifier (the time information and information on the entity). The log entry functions as a kind of pointer to the piece of data or to the pieces of data.

An archiving event is also detected if an event defined in the archiving rules occurs. For example, if an archiving rule is "store values of devices of type X when a new hour begins", for each device of type X a corresponding log entry with a corresponding identifier and indication of values of each device is added each time a new hour begins to the archiving log. Alternatively, one log entry comprising corresponding information in a combined form may be added.

As is evident from the above, whenever something that has been preconfigured to be archived happens, one or more log entries are added to the archiving log. Further, to provide flexibility, also user inputs indicating archiving will cause that one or more log entries are added to the archiving log.

Figure 4 illustrates an example what the archiving unit, or a corresponding instance, performs during the archiving procedure, when the background operation is the one described above with Figure 3.

The archiving procedure starts when triggering the archiving is detected (step 401). The archiving may be triggered in response to receiving a specific user input instructing to start the archiving. The archiving is also triggered in response to an archiving triggering rule being fulfilled.

When the archiving is triggered, a portion that is to be archived in the active history is determined in step 402. The portion may be the tail portion, or the tail portion and pieces of data stored within a certain time after the time the length indicator indicates at the moment the archiving is triggered.

Once the portion is determined, log entries that overlap the portion are determined in step 403. A log entry overlaps the portion when the time information indicates that at least part of the event(s) that created the log entry happened during the portion or within a margin of safety of the portion, if such a margin of safety marginal is implemented. The margin of safety may be used to ensure that relevant pieces of data are not deleted near the borderline of the active history and its tail portion.

Then a log entry amongst the determined log entries is taken in step 404 to be processed. In the illustrated example, it is checked in step 405, whether or not in the archiving rules there are one or more rules to apply to the log entry. If there is (step 405: yes), the one or more rules are applied in step 406 to update log entries. The applying and updating may include, depending on the rule(s), one or more of the following: to update time information in the log entry, to create one or more further log entries, to maintain the log entry as it is, and if the rule is a filtering rule, a log entry or part of it may be emptied or deleted. By applying the one or more rules it is ensured that all pieces of data that are defined to be of possible importance will be archived. For example, if the log entry indicates a specific KPI and there is an archiving rule defining that all pieces of data stored to the active history a certain time before the time of the calculation time of the KPI should be archived, and the user input only indicated the value of the specific KPI to be stored, by applying the rule and updating the time information in the log entry, or creating further log entries, more pieces of data will be archived.

Once the applying and updating has been performed, it is checked in step 407, whether or not all log entries determined in step 403 have been processed. If not (step 407: no), the process continues to step 404 to take another log entry to be processed.

If there is no rule to apply to the log entry processed (step 405: no), the process continues to step 407 to check, whether or not all log entries determined in step 403 have been processed.

When all log entries determined in step 403 have been processed (step 407: yes), a piece of data in the portion is taken in step 408 to be processed. Then the content of the archiving log is used to determine in step 409 whether or not the piece of data is indicated in one or more log entries. If the piece of data is not indicated in any log entry (step 409: no), the piece of data is deleted from the archive and then the process proceeds to step 411 to check, whether or not all pieces of data in the portion that was determined in step 403 have been processed. If not (step 411: no), the process continues to step 408 to take another piece of data in the portion to be processed.

If the piece of data is indicated in a log entry (step 409: yes), the process proceeds to step 411 to check, whether or not all pieces of data in the portion that was determined in step 403 have been processed.

When all pieces of data in the portion have been processed (step 411: yes), the archiving procedure ends in step 412.

Figures 5 and 6 illustrate examples that are alternative implementations to the implementations described above with Figures 3 and 4, correspondingly. The above examples describing what constitutes an archiving event, and the principles relating when to apply a rule, are applicable also herein, and are not repeated in vain. The difference between the implementations is that the one described with Figures 3 and 4 uses less processing resources when the archiving event is detected but more during the archiving procedure compared to the implementation described with Figures 5 and 6.

Figure 5 illustrates an example what the tracking unit, or a corresponding instance, performs as a background operation when different pieces of data are stored to the active history of the online archiving equipment, or some data is retrieved from the online archiving equipment. In the example it is assumed that the tracking unit monitors data inputs and data outputs (i.e. data retrievals) but that is not separately shown.

Referring to Figure 5, when an archiving event is detected (step 501: yes), it is checked in step 502, whether or not in the archiving rules there are one or more rules to apply to the archiving event. If there is (step 502: yes), the one or more rules are applied in step 503 when corresponding one or more log entries are added in step 503 to the archiving log. Then the process returns to step 501 to monitor whether or not an archiving event is detected.

If there is no rule to apply to the event (step 502: no), one or more log entries corresponding to the event are added in step 504 to the archiving log.

Figure 6 illustrates another example what the archiving unit, or a corresponding instance, performs during the archiving procedure when the archiving log is maintained as described with Figure 5.

Referring to Figure 6, when triggering the archiving is detected (step 601), a portion that is to be archived in the active history is determined in step 602, as explained above with Figure 4. Then each piece of data that is within the portion and is indicated by a log entry in the archiving log is maintained in step 603 in the history, thereby becoming part of archived history. Correspondingly, each piece of data not indicated by a log entry will be deleted in step 603 from the portion, i.e. from the active history, and will not become part of archived history.

As can be seen from the above examples, a piece of data is not copied during the archiving regardless whether it has been indicated by one, two, three, etc. log entries. This allows different archiving events to indicate one piece of data to be archived several times without any checking.

Figure 7 illustrates an example of how the data in the online archiving equipment may be used. The functionality may be performed by the archiving unit, by the tracking unit, by a separate unit for data searches, or any corresponding instance. However, it should be appreciated that any conventional data search methods (mechanisms) may be used with the data archive maintained as described above; data maintained in the archive remains searchable regardless whether it, or part of it, is in the active history, or in the archived history. In the illustrated example it is assumed that there are two types of searches, a first type being time series (time sequences) search type and a second type being event-specific search type. A highly exemplified example of the first type is "search for received data input (signals) from device A during the last five months", and a highly exemplified example of the second type is "search for occurrences of this specific event of device A during the last five months". Herein the second type is called event-specific search type. The search types may be separated from each other on the basis of the structure of the query, or a query attribute may indicate the type, for example. It should be appreciated that any suitable way to separate the two search types may be used.

Referring to Figure 7, when a user input searching for specific data, or a query for specific data, the query originating from a device, is received in the online archiving equipment, a search for the specific data is detected in step 701. Then the search type is determined in step 702.

If the search type is the event-specific search (step 702: yes), log entries corresponding to the search attributes in the search, such as event type, entity/entities possibly indicated and/or a time interval (time condition), are determined in step 703, and pieces of data corresponding to the determined log entries are retrieved in step 704. It should be appreciated that if the data tracking according to Figure 3 is implemented, the steps may involve the applying of the one or more rules, described above with Figures 4 and 5, for example.

In the illustrated example it is assumed that situations in which no piece of data has been received, for example because of a malfunction no KPI is stored even though according to the archiving rule it is supposed to be stored, and hence cannot be found, that is indicated in the event-specific search. Therefore it is checked, in step 705, whether any retrieval resulted to an empty result. If there was one or more empty results (step 705: yes), an indication of "no data available" is provided in step 706 as a retrieved piece of data for each empty result. Then the retrieved pieces of data are returned in step 707 as a search result. If there is no empty results (step 705: no), the retrieved pieces of data are returned in step 707 as a search result.

If the search type is not the event-specific search (step 702: no), pieces of data corresponding to the search attributes in the search are retrieved in step 708 from the combined archive using at least the indicated time condition, such as the time interval or time series, as a search key. The step may be performed as they are performed according to prior art. Then the pieces obtained from the combined archive, if any, are returned in step 707 as the search result.

As can be seen from the above, the archiving log may be used as a navigation tool. Further, no restoring of archived history from separate media is required, even when the archiving log is not used as the navigation tool, thereby facilitating retrieval of data.

An overview of the above is that an active history and an archived history is maintained in an online archiving equipment, as well as indexes over the active history and the archived history, and the data in the active history and the archived history can be accessed seamlessly, for example via an application programming interface provided by the online archiving equipment. In other words a new, clever history table structure is provided, the history table structure allowing storing archived data as part of the active history so that they are seamlessly indexed and integrated in the data access point interfaces. Database management services are handling the archiving as a background task according to the requests (archiving rules, log entries) in the archiving log while performing the normal clean-up of the history tables. An advantage is that users of the data do not see and they do not have to know whether the data is retrieved from the active history or from the archived history. A further advantage is that the occurrence time of the background task may be adjusted according to processing resources available, for example.

The steps and related functions described above in Figures 3 to 7 are in no absolute chronological order, and some of the steps may be performed simultaneously or in an order differing from the given one. Other functions can also be executed between the steps or within the steps. For example, the check whether there is a rule to apply (step 405 or step 502) may be made only if the log entry/event to be archived is received as a user input. Another example is copying, when deleting pieces of data, those pieces to an external memory. Some of the steps or part of the steps can also be left out or replaced by a corresponding step or part of the step. For example, the steps 705 and 706, resulting in "no data available" search results, may be left out. Another example is using the archiving log as a navigation tool for all searches, i.e. leaving out steps 702 and 708.

The techniques described herein may be implemented by various means so that an apparatus/device implementing one or more functions described with an embodiment, or a combination of embodiments, comprises not only prior art means, but also specific means for implementing the one or more functions described with an embodiment and it may comprise separate means for each separate function, or specific means may be configured to perform two or more functions. The specific means may be software and/or software-hardware and/or hardware and/or firmware components (recorded indelibly on a medium such as read-only-memory or embodied in hard-wired computer circuitry) or combinations thereof. Software codes may be stored in any suitable, processor/computer-readable data storage medium(s) or memory unit(s) or article(s) of manufacture and executed by one or more processors/computers, hardware (one or more apparatuses), firmware (one or more apparatuses), software (one or more modules), or combinations thereof. For firmware or software, implementation can be through modules (e.g., procedures, functions, and so on) that perform the functions described herein.

The techniques and methods described herein may be implemented by various means so that a device/an apparatus configured to support online long term archiving on at least partly on what is disclosed above with any of Figures 1 to 7, including implementing one or more functions/operations of a corresponding device described above with an embodiment/example, for example by means of any of Figures 2 to 7, comprises not only prior art means, but also means for implementing the one or more functions/operations of a corresponding functionality described with an embodiment/example, for example by means of any of Figures 2 to 7, and the device may comprise separate means for each separate function/operation, or means may be configured to perform two or more functions/operations. For example, one or more of the means and/or the tracking unit and/or the archiving unit described above may be implemented in hardware (one or more devices), firmware (one or more devices), software (one or more modules), or combinations thereof. For a hardware implementation, the device (s) or apparatus (es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, logic gates, other electronic units designed to perform the functions described herein by means of Figures 2 to 7, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components described herein may be rearranged and/or complemented by additional components in order to facilitate the achievements of the various aspects, etc., described with regard thereto, and they are not limited to the precise configurations set forth in the given figures, as will be appreciated by one skilled in the art.

Figure 8 is a simplified block diagram illustrating some units for equipment 800 configured to provide the online archiving equipment, or a corresponding computing device, comprising at least one or more tracking units and/or one or more archiving units, or corresponding units and sub-units, described above with Figures 1 to 7 or corresponding functionality or some of the corresponding functionality if functionalities are distributed in the future. In the illustrated example, the equipment comprises one or more interfaces (IF) 801 for receiving and/or transmitting information from or to other devices, and possibly from or to a user, one or more processors 802 configured to implement the tracking unit and/or the archiving unit, described above with Figures 1 to 7, or at least part of corresponding functionality as a sub-unit functionality if distributed scenario is implemented, with corresponding algorithms 803, and one or more memories 804 usable for storing, in addition to the archiving log, the active history, the archiving log and the archiving rules, a computer program code required for the one or more tracking units and/or for the one or more archiving units, or for one or more corresponding units or sub-units, i.e. the algorithms for implementing the functionality. The memory 804 is also usable for storing other possible information.

In other words, equipment (device, apparatus) configured to provide the online archiving equipment, or a device/apparatus configured to provide one or more the corresponding functionalities described above with Figures 1 to 7, is a computing equipment that may be any apparatus or device or equipment or node configured to perform one or more of the corresponding functionalities described above with an embodiment/example/implementation, and it may be configured to perform functionalities from different embodiments/examples/implementations. The one or more tracking units and/or the one or more archiving units, as well as corresponding units and sub-units may be separate units, even located in another physical apparatus, the distributed physical apparatuses forming one logical equipment providing the functionality, or integrated to another unit in the same equipment.

The equipment configured to provide the online archiving equipment, or a device configured to provide one or more corresponding functionalities may generally include one or more processors, controllers, control units, micro-controllers, or the like connected to one or more memories and to various interfaces of the equipment. Generally a processor is a central processing unit, but the processor may be an additional operation processor. Each or some or one of the units/sub-units and/or algorithms described herein may be configured as a computer or a processor, or a microprocessor, such as a single-chip computer element, or as a chipset, including at least a memory for providing storage area used for arithmetic operation and an operation processor for executing the arithmetic operation. Each or some or one of the units/sub-units and/or algorithms described above may comprise one or more computer processors, application-specific integrated circuits (ASIC), digital signal processors (DSP), digital signal processing devices (DSPD), programmable logic devices (PLD), field-programmable gate arrays (FPGA), logic gates and/or other hardware components that have been programmed and/or will be programmed by downloading computer program code (one or more algorithms) in such a way to carry out one or more functions of one or more embodiments/implementations/examples. An embodiment provides a computer program embodied on any client-readable distribution/data storage medium or memory unit(s) or article(s) of manufacture, comprising program instructions executable by one or more processors/computers, which instructions, when loaded into a device, constitute the tracking unit and/or the archiving unit, or any sub-unit. Programs, also called program products, including software routines, program snippets constituting "program libraries", applets and macros, can be stored in any medium and may be downloaded into an apparatus. In other words, each or some or one of the units/sub-units and/or the algorithms described above may be an element that comprises one or more arithmetic logic units, a number of special registers and control circuits.

Further, the equipment configured to provide the online archiving equipment, or a device configured to provide one or more of the corresponding functionalities described above with Figures 1 to 7 may generally include volatile and/or non-volatile memory, for example EEPROM, ROM, PROM, RAM, DRAM, SRAM, double floating-gate field effect transistor, firmware, programmable logic, etc. and typically store content, data, or the like. The memory or memories may be of any type (different from each other), have any possible storage structure and, if required, being managed by any database management system. In other words, the memory, or part of it, may be any computer-usable non-transitory medium within the processor/equipment or external to the processor/equipment, in which case it can be communicatively coupled to the processor/equipment via various means as is known in the art. Examples of an external memory include a removable memory detachably connected to the apparatus, a distributed database and a cloud server. The memory may also store computer program code such as software applications (for example, for one or more of the units/sub-units/algorithms) or operating systems, information, data, content, or the like for the processor to perform steps associated with operation of the equipment in accordance with examples/embodiments.

It will be obvious to a person skilled in the art that, as technology advances, the inventive concept can be implemented in various ways. The invention and its embodiments are not limited to the examples described above but may vary within the scope of the claims.

## Claims

1. A computerized method comprising:
maintaining in an online archiving equipment an archiving log and an archive comprising an active history and an archived history;
adding, by the equipment, in response to receiving a piece of data from a device, the piece of the data to the active history;
checking, by the equipment, whether an archiving event is detected in response to receiving the piece of the data;
adding, by the equipment, in response to an archiving event being detected, to the archiving log one or more corresponding log entries with information indicating to one or more pieces of the data to be archived; and
deleting, by the equipment, during an archiving process, which converts part of the active history to be part of the archived history, from the active history those pieces of the data that are not indicated in the archiving log as the data to be archived and maintaining, by the equipment, in the part becoming part of the archived history those pieces of data that are indicated in the archiving log as the data to be archived.

2. A computerized method as claimed in claim 1, further comprising:
maintaining in the equipment one or more predetermined archiving rules defining what to archive;
detecting, by the equipment, an archiving event in response to an archiving rule amongst the one or more predetermined archiving rules being fulfilled; and
performing, by the equipment, the adding as indicated by the archiving rule.

3. A computerized method as claimed in claim 1 or 2, further comprising:
detecting, by the equipment, an archiving event in response to a user input indicating archiving the one or more pieces of the data; and
performing, by the equipment, the adding as indicated by the user input.

4. A computerized method as claimed in any preceding claim, further comprising:
checking, by the equipment, for a log entry, whether or not there is one or more archiving rules to be applied to the log entry; and
applying, in response to an archiving rule to be applied to the log entry, the archiving rule to the log entry when the log entry is added or during the archiving process.

5. A computerized method as claimed in any preceding claim, further comprising:
determining a time interval for archiving, the time interval starting from the oldest data in the active history; and
performing the deleting during the archiving process to data pieces within the time interval in the active history and leaving data pieces not belonging to the time interval to the active history.

6. A computerized method as claimed in any preceding claim, further comprising:
maintaining in the online archiving equipment one or more predetermined archiving triggering rules;
triggering the archiving procedure in response to a predetermined archiving triggering rule being fulfilled.

7. A computerized method as claimed in any preceding claim, further comprising triggering the archiving procedure in response to a user input triggering the archiving.

8. A computerized method as claimed in any preceding claim, further comprising:
receiving in the online archiving equipment a request for specific data;
using, by the equipment, the log entries in the archiving log to determine pieces of the specific data to be retrieved; and
retrieving, by the equipment, the pieces of the specific data to be included in a response to the request.

9. A computerized method as claimed in any preceding claim 1 to 8, further comprising:
receiving in the online archiving equipment a request for specific data; and
retrieving, by the equipment, the pieces of the specific data to be included in a response to the request from the active history and the archived history using time condition in the request as a search key.

10. A computer program product comprising program instructions which, when run on a computing apparatus, causes the computing apparatus to perform a method as claimed in any preceding claim.

11. An online archiving equipment comprising means for implementing a method as claimed in any of claims 1 to 9.
